Europäisches Patentamt

(19) European Patent Office

Office européen des brevets

(11) Numéro de publication: **0 237 071**
**B1**

(12) **FASCICULE DE BREVET EUROPEEN**

(45) Date de publication du fascicule du brevet:
24.10.90

(51) Int. Cl.⁵: **F02M 43/00**

(21) Numéro de dépôt: 87103599.4

(22) Date de dépôt: 12.03.87

(54) **Dispositif d'injection pour moteur à combustion interne, permettant l'injection de deux combustibles.**

(30) Priorité: 14.03.86 FR 8603691

(43) Date de publication de la demande:
16.09.87 Bulletin 87/38

(45) Mention de la délivrance du brevet:
24.10.90 Bulletin 90/43

(84) Etats contractants désignés:
AT BE CH DE ES FR GB IT LI NL SE

(56) Documents cités:
WO-A-86/00667
DE-A- 3 011 376
DE-A- 3 221 374
DE-A- 3 330 774
DE-A- 3 330 987
GB-A- 2 027 804

(73) Titulaire: SOCIETE D'ETUDES DE MACHINES
THERMIQUES S.E.M.T., 2, Quai de Seine,
F-93202 Saint-Denis(FR)

(72) Inventeur: Baguena, Michel, 18, rue Ferrus,
F-75014 Paris(FR)

(74) Mandataire: Weinmiller, Jürgen,
Lennéstrasse 9 Postfach 24, D-8133 Feldafing(DE)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif d'injection pour moteur à combustion interne, permettant l'injection de deux combustibles, un combustible liquide dit de préinjection et un combustible gazeux dit d'injection principale, comportant une pompe basse pression pour l'alimentation en combustible de préinjection, une pompe haute pression, du type pompe d'injection, deux injecteurs de combustible et une pompe doseuse reliant de manière sélective la pompe basse pression, la pompe haute pression et les deux injecteurs de combustible, cette pompe doseuse comportant un piston transfert dont une face délimite un volume moteur en communication permanente avec la pompe haute pression et dont l'autre face délimite un volume récepteur en communication permanente avec un conduit connecté à la pompe basse pression et avec un conduit connecté à la chambre de pression de l'aiguille de préinjection, le volume moteur étant connecté avec la chambre de pression de l'aiguille d'injection principale par un premier orifice de la pompe doseuse, la pression dans cette chambre de pression contrôlant l'ouverture et la fermeture de ladite aiguille d'injection principale, et la pompe doseuse comportant deux butées réglables indépendamment l'une de l'autre, limitant chacune la course du piston dans un sens.

On connaît des dispositifs d'injection de ce genre, tel celui décrit dans le document DE 3 330 987, qui permet l'injection de deux combustibles différents pour la préinjection et l'injection principale. Dans ce document rien n'est prévu si pour une raison quelconque l'alimentation en combustible d'injection principale est interrompue.

Le but de la présente invention est de remédier à cet inconvénient en prévoyant automatiquement, en cas d'arrêt de l'alimentation en combustible gazeux, une alimentation en combustible liquide.

Le dispositif de la présente invention est caractérisé en ce que le piston de transfert contrôle ledit premier orifice et en ce que la pompe doseuse comporte un deuxième orifice susceptible d'être mis en communication avec le volume moteur, et un troisième orifice susceptible d'être mis en communication avec le volume récepteur, et une canalisation reliant le deuxième et le troisième orifice, une position extrême de la butée du volume moteur et une position extrême de la butée du volume récepteur mettant en communication permanente les deux volumes au moyen de ce deuxième et troisième orifice, le piston de transfert obturant alors le premier orifice et interdisant ainsi la communication entre le volume moteur et la chambre de pression de l'aiguille d'injection principale.

De préférence, l'aiguille d'injection principale comporte un ensemble de canaux mettant en communication la chambre de pression et un circuit de retour des fuites lorsque l'aiguille est en position levée, et un conduit muni d'un clapet anti-retour permet au fluide de circuler de la chambre de pression de l'aiguille d'injection principale vers la pompe haute pression, afin de vidanger la chambre de pression.

On connaît également, par le document WO 86/00667, une pompe doseuse comportant une butée qui coulisse dans un alésage où se déplace un piston, mais cette pompe ne comporte pas deux orifices reliés par une canalisation qui met en communication le volume moteur et le volume récepteur situé de part et d'autre du piston de la pompe.

La présente invention a donc également pour objet une pompe doseuse d'un dispositif d'injection, pour moteur à combustion interne, permettant l'injection de deux combustibles, un combustible liquide dit de préinjection et un combustible gazeux dit d'injection principale, comprenant un piston transfert dont une face délimite un volume moteur en communication permanente avec la pompe haute pression, et dont l'autre face délimite un volume récepteur en communication permanente avec un conduit connecté à la pompe basse pression et avec un conduit connecté à la chambre de pression de l'aiguille de préinjection, un premier orifice pour connecter le volume moteur avec la chambre de pression de l'aiguille d'injection principale, et deux butées réglables indépendamment l'une de l'autre, limitant chacune la course du piston de transfert dans un sens, chaque butée comportant son propre moyen de réglage de position, caractérisée en ce qu'elle est constituée par un corps percé d'un alésage dans lequel le piston de transfert coulisse entre les deux butées et contrôle le premier orifice, en ce que chaque butée coulisse également dans l'alésage pour régler la course du piston de transfert, en ce qu'elle comporte un deuxième orifice susceptible d'être mis en communication avec le volume moteur, un troisième orifice susceptible d'être mis en communication avec le volume récepteur, et une canalisation reliant le deuxième et le troisième orifice, et en ce que la position du premier orifice est telle que le piston ferme cet orifice quand la butée du volume moteur et la butée du volume récepteur sont chacune dans une position extrême dans laquelle les deux volumes sont mis en communication permanente au moyen de ce deuxième et troisième orifice.

Il est décrit ci-après, à titre d'exemple et en référence aux dessins annexés, un dispositif selon l'invention.

La figure 1 représente le dispositif d'injection et sa pompe doseuse associée.

Les figures 2 et 3 représentent deux cas de réglage de la pompe doseuse.

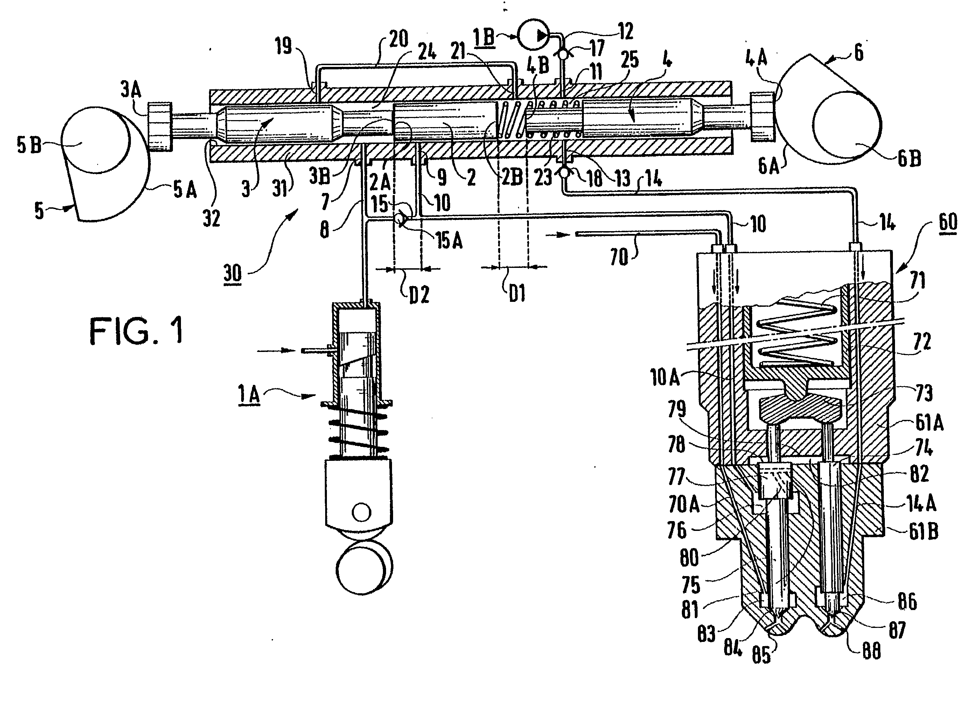

Dans la figure 1, une pompe haute pression 1A, du type pompe d'injection et connue en tant que telle, refoule un fluides dans une canalisation 8, et une pompe basse pression 1B refoule un combustible liquide de préinjection dans une canalisation 12 sur laquelle est montée en série un clapet anti-retour 17 à très faible tarage.

La canalisation 8 de la pompe haute pression 1A et la canalisation 12 de la pompe basse pression sont reliées à une pompe doseuse 30, elle-même reliée à un bloc injecteur 60.

Cette pompe doseuse 30 comporte un corps 31 percé d'un alésage 32 qui reçoit un piston transfert 2 coulissant et deux butées 3, 4 coulissantes montées d'une façon étanche dans l'alésage 32.

L'extrémité 3B de la butée 3 et l'extrémité 4B de la butée 4 déterminent chacune une limite de déplacement du piston 2, la face 2A du piston pouvant prendre appui sur l'extrémité 3B de la butée 3 et la face 2B du piston pouvant prendre appui sur l'extrémité 4B de la butée 4. L'autre extrémité 3A de la butée 3 prend appui sur une surface active 5A d'une came 5 et l'autre extrémité 4A de la butée 4 prend appui sur une surface active 6A d'une came 6.

Les axes 5B et 6B des cames 5 et 6 sont fixes par rapport au corps 31. Un ressort de compression 23 peut être installé entre le piston 2 et la butée 4.

Le piston 2 définit avec la butée 3 un volume moteur 24 et avec la butée 4 un volume récepteur 25.

Un orifice 7, relié à la canalisation 8, met le volume moteur 24 en communication avec la chambre de travail de la pompe haute pression 1A. Un orifice 9, relié à une canalisation 10, 10A met le volume moteur 24 en communication avec le bloc injecteur 60.

Un orifice 11, relié à la canalisation 12, met le volume récepteur 25 en communication avec la source à basse pression. Un orifice 13, relié à une canalisation 14, 14A, sur laquelle est monté un clapet anti-retour 18, met le volume récepteur 25 en communication avec le bloc injecteur 60.

La pompe doseuse 30 comporte deux orifices 19, 21 reliés par une canalisation 20, cet ensemble permettant, dans certaines conditions décrites ci-après, d'assurer une communication entre le volume moteur 24 et le volume récepteur 25.

Le bloc injecteur 60 comporte un corps 61A et un nez 61B. Le nez 61B contient une aiguille 74 de préinjection pour combustible liquide, coopérant avec une chambre de pression 86 et un siège associé 87. La pulvérisation est assurée par la série d'orifices 88. La chambre de pression 86 est reliée au volume récepteur 25 par l'intermédiaire de la canalisation 14, 14A, et de l'orifice 13.

Le nez 61B contient également une aiguille 75 pour combustible gazeux coopérant avec une chambre d'alimentation 83 et un siège associé 84. La pulvérisation est assurée par la série d'orifices de pulvérisation 85. La chambre 83 est reliée par un conduit 70, 70A à une source de gaz sous haute pression (250 bars par exemple) non représentée. Une chambre de pression 76 coopère avec un épaulement 77 de l'aiguille 75. Dans la position levée, la face 78 de l'aiguille 75 vient en butée sur la face 79 du corps 61A permettant alors à la série de canaux 80, 81, de mettre en communication la chambre de pression 76 avec un canal de retour de fuites 82. La chambre de pression 76 est reliée par l'intermédiaire de la canalisation 10, 1OA et de l'orifice 9 au volume moteur 24 de la pompe doseuse. Un ressort 71, coopérant avec un poussoir 72 et un palonnier 73 non nécessairement symétrique, applique les aiguilles 74 et 75 sur leur siège.

Une canalisation 15, sur laquelle est installée en série un clapet anti-retour 15A, relie les canalisations 8 et 10 et permet la vidange de la chambre de pression 76 et donc la fermeture de l'aiguille d'injection principale 75.

L'injection se passe de la manière suivante:

Sous l'effet de la pression permanente régnant dans le conduit 12, éventuellement sous l'effort du ressort 23, et en l'absence de pression de refoulement venant de la pompe 1A par le conduit 8, le piston de transfert 2 est appliqué, en début de cycle, contre la butée 3. La butée 3 est disposée de telle sorte que le piston 2 obture l'orifice 9 et la butée 4 est disposée de telle sorte que cet orifice 9 puisse être découvert lors du mouvement du piston 2. Lorsque la pompe 1A refoule dans le conduit 8, la pression engendrée dans le volume moteur 24, pousse le piston 2 dans l'alésage 32 et provoque le refoulement à pression identique du combustible de préinjection du volume récepteur 25 vers la canalisation 14. Ce refoulement a lieu jusqu'à ce que le piston 2 rencontre la butée 4. Le volume engendré en préinjection dépend donc de la distance D1 installée au départ entre la face 2B du piston 2 et la butée 4. Par ailleurs, le piston 2 franchit la distance D2 séparant la face 2A du piston 2 de l'orifice 9. Tant que l'orifice 9 est masqué par le piston 2, aucune pression ne s'installe dans la canalisation 10, 10A. Mais dès que la face 2A du piston 2 découvre l'orifice 9, le combustible principal est injecté conjointement à la préinjection qui se poursuit tant que le piston 2 ne heurte pas la butée 4. L'injection principale se poursuit jusqu'à l'interruption du refoulement de la pompe 1A.

Il apparaît donc que la maîtrise des distances D1 et D2 donne la possibilité de faire varier l'importance relative de la préinjection et de l'injection principale ainsi que l'importance du recouvrement de ces deux phases d'injection.

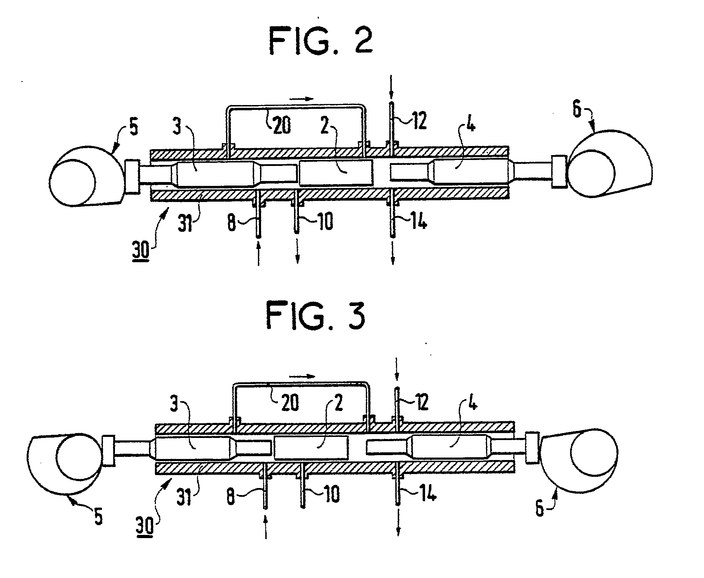

La figure 3 montre le cas de fonctionnement autorisé par le dispositif de l'invention, dans lequel la levée de l'aiguille d'injection principale devient inutile et il convient alors de la neutraliser. La butée 4 est alors réglée de telle manière que le piston 2 obture constamment l'orifice 9, et l'orifice 21 est placé, par rapport à la butée 4, de telle manière qu'il ne soit jamais obturé par le piston 2. La butée 3 est réglée de telle manière que l'orifice 19 soit constamment découvert. Ce réglage des deux butées permet une communication entre le volume moteur et le volume récepteur. La préinjection et l'injection principale sont alors remplacées par une injection unique qui se fait par l'intermédiaire de l'aiguille 74 et des orifices 88.

Cela nécessite que le fluide fourni par la pompe haute pression 1A soit combustible.

La position des cames 5, 6 peut être asservie aux paramètres de fonctionnement du moteur tels que la vitesse, le couple, la pression d'air d'admission, les températures de fluides de refroidissement, les conditions de combustion, etc...

Bien entendu, la pompe doseuse 30 peut être soit séparée soit réunie par construction en un ensemble monobloc avec la pompe haute pression 1A, et le bloc injecteur 60 peuvent être constitué par deux injecteurs séparés.

**Revendications**

1. Dispositif d'injection pour moteur à combustion interne, permettant l'injection de deux combustibles, un combustible liquide dit de préinjection et un combustible gazeux dit d'injection principale, comportant une pompe basse pression (1B) pour l'alimentation en combustible de préinjection, une pompe haute pression (1A), du type pompe d'injection, deux injecteurs de combustible et une pompe doseuse (30) reliant de manière sélective la pompe basse pression, la pompe haute pression et les deux injecteurs de combustible, cette pompe doseuse (30) comportant un piston transfert (2) dont une face (2A) délimite un volume moteur (24) en communication permanente avec la pompe haute pression (1A) et dont l'autre face (2B) délimite un volume récepteur (25) en communication permanente avec un conduit connecté à la pompe basse pression (IB) et avec un conduit connecté à la chambre de pression (86) de l'aiguille de préinjection (74), le volume moteur (24) étant connecté avec la chambre de pression (76) de l'aiguille d'injection principale par un premier orifice (9) de la pompe doseuse, la pression dans cette chambre de pression (76) contrôlant l'ouverture et la fermeture de ladite aiguille d'injection principale (75), et la pompe doseuse comportant deux butées (3, 4) réglables indépendamment l'une de l'autre, limitant chacune la course du piston dans un sens, caractérisé en ce que le piston de transfert (2) contrôle ledit premier orifice et en ce que la pompe doseuse comporte un deuxième orifice (19) susceptible d'être mis en communication avec le volume moteur (24), et un troisième orifice (21) susceptible d'être mis en communication avec le volume récepteur, et une canalisation (20) reliant le deuxième et le troisième orifice, une position extrême de la butée du volume moteur et une position extrême de la butée du volume récepteur mettant en communication permanente les deux volumes au moyen de ce deuxième et troisième orifice (19, 21), le piston de transfert obturant alors le premier orifice (9) et interdisant ainsi la communication entre le volume moteur (24) et la chambre de pression (76) de l'aiguille d'injection principale (75).

2. Dispositif d'injection selon la revendication 1, caractérisé en ce que l'aiguille d'injection principale (75) comporte un ensemble de canaux (80, 81) mettant en communication la chambre de pression (76) et un circuit de retour des fuites (82) lorsque l'aiguille (75) est en position levée.

3. Dispositif d'injection selon l'une des revendications 1 ou 2, caractérisé en ce qu'un conduit (15) muni d'un clapet anti-retour (15A) permet au fluide de circuler de la chambre de pression (76) de l'aiguille d'injection principale (75) vers la pompe haute pression (1A).

4. Pompe doseuse (30) d'un dispositif d'injection, pour moteur à combustion interne, permettant l'injection de deux combustibles, un combustible liquide dit de préinjection et un combustible gazeux dit d'injection principale, comprenant un piston transfert (2) dont une face (2A) délimite un volume moteur (24) en communication permanente avec la pompe haute pression (1A), et dont l'autre face (2B) délimite un volume récepteur (25) en communication permanente avec un conduit connecté à la pompe basse pression (IB) et avec un conduit connecté à la chambre de pression (86) de l'aiguille de préinjection (74), un premier orifice (9) pour connecter le volume moteur (24) avec la chambre de pression de l'aiguille d'injection principale, et deux butées (3, 4) réglables indépendamment l'une de l'autre, limitant chacune la course du piston de transfert dans un sens, chaque butée comportant son propre moyen de réglage (5, 6) de position, caractérisée en ce qu'elle est constituée par un corps (31) percé d'un alésage (32) dans lequel le piston de transfert (2) coulisse entre les deux butées (3, 4) et contrôle le premier orifice, en ce que chaque butée coulisse également dans l'alésage (32) pour régler la course du piston de transfert, en ce qu'elle comporte un deuxième orifice (19) susceptible d'être mis en communication avec le volume moteur (24), un troisième orifice (21) susceptible d'être mis en communication avec le volume récepteur (25), et une canalisation (20) reliant le deuxième et le troisième orifice (19, 21), et en ce que la position du premier orifice (9) est telle que le piston (2) ferme cet orifice (9) quand la butée du volume moteur et la butée du volume récepteur sont chacune dans une position extrême dans laquelle les deux volumes sont mis en communication permanente au moyen de ce deuxième et troisième orifice (19, 21).

**Claims**

1. An injector apparatus for an internal combustion engine, the apparatus being capable of injecting two fuels, namely a "pilot injection" liquid fuel and a "main injection" gaseous fuel, the injector apparatus comprising a low-pressure pump (1B) for pilot injection fuel feed, a high-pressure injection-type pump (1A), two fuel injectors, and a metering pump (30) selectively connecting the low-pressure pump, the high-pressure pump, and the two fuel injectors, said metering pump (30) including a transfer piston (2) with one of its faces (2A) delimiting an engine volume (24) in permanent communication with the high-pressure pump (1A) and with its other face (2B) delimiting a reception volume (25) in permanent communication with a duct leading to the low-pressure pump (IB) and with a duct leading to the pressure chamber (86) of the pilot injection needle (74), the engine volume (24) being connected with the pressure chamber (76) of the main injection needle via a first orifice (9) of the metering pump, the pressure in this pressure chamber (76) controlling the operation of said main injection needle (75), and the metering pump comprising two independently adjustable abutments (3, 4), each of which limits the stroke of the piston in a respective direction, characterized in that the transfer piston (2) controls said first orifice and that the metering pump comprises a second orifice (19) which can be put in communication with the engine volume (24), and a third orifice (21) which can be put in communication with the reception volume, and a duct (20) interconnecting the second and the third orifices, with an extreme position of the engine volume abutment and an extreme position of the reception volume abutment allowing both volumes to continuously communicate via said second and third orifices (19, 21), the transfer piston then closing the first orifice (9) and preventing the engine volume (24) and the pressure chamber (76) of the main injection needle (75) from intercommunicating.

2. An injector apparatus according to claim 1, characterized in that the main injection needle (75) includes a set of ducts (80, 81) putting the pressure chamber (76) and a leak return circuit (82) into communication when the needle (75) is in a raised position.

3. An injector apparatus according to claim 1 or 2, characterized in that a duct (15) provided with a non-return valve (15A) enables fluid to flow from the pressure chamber (76) of the main injection needle (75) towards the high pressure pump (1A).

4. A metering pump (30) included in an injector apparatus for an internal combustion engine, said injector apparatus being capable of injecting two fuels, namely a "pilot injection" liquid fuel and a "main injection" gaseous fuel, the metering pump including a transfer piston (2) with one of its faces (2A) delimiting an engine volume (24) in permanent communication with the high-pressure pump (1A) and with its other face (2B) delimiting a reception volume (25) in permanent communication with a duct leading to the low-pressure pump (lB) and with a duct leading to the pressure chamber (86) of the pilot injection needle (74), a first orifice (9) connecting the engine volume (24) with the pressure chamber of the main injection needle, and two independently adjustable abutments (3, 4), each of which limits the stroke of the transfer piston in a respective direction, each abutment comprising its own position adjustment means (5, 6), characterized in that it is constituted by a body (31) having a bore (32) in which the transfer piston (2) slides between the two abutments (3, 4) and controls the first orifice, that the abutments also slide in said bore (32) in order to adjust the stroke of the piston, that the metering pump comprises a second orifice (19) which can be put into communication with the engine volume (24), a third orifice (21), which can be put in communication with the reception volume (25), and a duct (20) interconnecting the second and the third orifices, and that the position of the first orifice (9) is such that the piston (2) obturates this orifice (9) when the engine volume abutment and the reception volume abutment are both in an extreme position in which both volumes communicate continuously via said second and third orifices (19, 21).

**Patentansprüche**

1. Einspritzeinrichtung zum Einspritzen zweier Brennstoffe in einen Verbrennungsmotor, nämlich einen flüssigen Voreinspritz-Brennstoff und einen gasförmigen Haupteinspritz-Brennstoff, mit einer Niederdruckpumpe (1B) zur Zufuhr des Voreinspeisungs-Brennstoffs, einer Hochdruckpumpe (1A) vom Einspritzpumpentyp, mit zwei Brennstoffinjektoren und einer Dosierpumpe (30), die wahlweise die Niederdruckpumpe, die Hochdruckpumpe und die beiden Brennstoffinjektoren miteinander verbindet, wobei die Dosierpumpe (30) einen Transferkolben (2) aufweist, dessen eine Seite (2A) ein dauernd mit der Hochdruckpumpe (IA) in Verbindung stehendes Motorvolumen (24) und dessen andere Seite (2B) ein dauernd an eine Leitung zur Niederdruckpumpe (1B) und an eine Leitung zur Druckkammer (86) der Voreinspritznadel (74) angeschlossenes Empfangsvolumen (25) begrenzt, wobei das Motorvolumen (24) mit der Druckkammer (76) der Haupteinspritznadel über eine erste Öffnung (9) der Dosierpumpe verbunden ist, wobei der Druck in dieser Druckkammer (76) das Öffnen und Schließen der Haupteinspritznadel (75) steuert und die Dosierpumpe zwei Anschläge (3, 4) besitzt, die unabhängig voneinander einstellbar sind und je den Hub des Kolbens in einer Richtung begrenzen, dadurch gekennzeichnet, dass der Transferkolben (2) die erste Öffnung steuert und dass die Dosierpumpe eine zweite Öffnung (19), die mit dem Motorvolumen (24) in Verbindung gebracht werden kann, und eine dritte Öffnung (21), die mit dem Empfangsvolumen in Verbindung gebracht werden kann, sowie eine Leitung (20) aufweist, die die zweite und dritte Öffnung miteinander verbindet, wobei die beiden Volumina über die zweite und dritte Öffnung (19, 21) in Verbindung stehen, wenn der Anschlag des Motorvolumens und der Anschlag des Empfangsvolumens sich je in einer Endstellung befinden, so daß dann der Transferkolben die erste Öffnung (9) verschließt und die Verbindung zwischen dem Motorvolumen (24) und der Druckkammer (76) der Haupteinspritznadel (75) sperrt.

2. Einspritzeinrichtung nach Anspruch 1, dadurch gekennzeichnet, daß die Haupt-Einspritznadel (75) eine Gruppe von Leitungen (80, 81) aufweist, die die Druckkammer (76) und einen Leckrücklaufkreis (82) miteinander in Verbindung bringen, wenn die Nadel (75) sich in ihrer abgehobenen Lage befindet.

3. Einspritzeinrichtung nach einem der Ansprüche 1 oder 2, dadurch gekennzeichnet, daß eine Leitung (15), in die ein Rückstoßventil (15A) eingebaut ist, das Fluid von der Druckkammer (76) der Haupteinspritznadel (75) zur Hochdruckpumpe (1A) fließen läßt.

4. Dosierpumpe (30) für eine Einspritzeinrichtung eines Verbrennungsmotors, die die Einspritzung von zwei Brennstoffen erlaubt, nämlich eines flüssigen Voreinspritz-Brennstoffs und eines gasförmigen Haupteinspritz-Brennstoffs, mit einem Transferkolben (2), dessen eine Seite (2A) ein dauernd mit der Hochdruckpumpe (IA) in Verbindung stehendes Motorvolumen (24) und dessen andere Seite (2B) ein dauernd mit einer an die Niederdruckpumpe (1B) angeschlossenen Leitung und mit einer an die Druckkammer (86) der Voreinspritznadel (74) angeschlossenen Leitung in Verbindung stehendes Empfangsvolumen (25) begrenzt, wobei die Dosierpumpe weiter eine erste Öffnung (9) zum Anschluß des Motorvolumens (24) an die Druckkammer (76) der Haupteinspritznadel und zwei unabhängig voneinander einstellbare Anschläge (3, 4) aufweist, die je den Hub des Transferkolbens in einer Richtung begrenzen und je ein eigenes Lageeinstellmittel (5, 6) besitzen, dadurch gekennzeichnet, daß die Dosierpumpe aus einem Gehäuse (31) mit einer Bohrung (32) besteht, in der der Transferkolben (2) zwischen den beiden Anschlägen (3, 4) gleitet und die erste Öffnung steuert, daß jeder Anschlag ebenfalls in der Bohrung (32) gleitet, um den Hub des Transferkolbens einzustellen, daß die Pumpe eine zweite Öffnung (19), die mit dem Motorvolumen (24) in Verbindung gebracht werden kann, eine dritte Öffnung (21), die mit dem Empfangsvolumen (25) in Verbindung gebracht werden kann, und eine Leitung (20) besitzt, die die zweite Öffnung (19) mit der dritten Öffnung (21) verbindet, und daß die Lage der ersten Öffnung (9) so gewählt ist, daß der Kolben (2) diese Öffnung (9) verschließt, wenn der Anschlag des Motorvolumens und der Anschlag des Empfangsvolumens je sich in einer Endposition befinden, in der die beiden Volumina in dauernder Verbindung über die zweite und die dritte Öffnung (19, 21) stehen.

FIG. 1

EP 0 237 071 B1

# FIG. 2

# FIG. 3